# NEUE EUROPÄISCHE PATENTSCHRIFT

(11) **EP 1 830 107 B2**
(45) Veröffentlichungstag und Bekanntmachung des Hinweises auf die Entscheidung über den Einspruch: **07.09.2011**
(45) Hinweis auf die Patenterteilung: 01.04.2009
(21) Anmeldenummer: 07003269.3
(22) Anmeldetag: 16.02.2007
(51) Int. Cl.: F16H 45/02

(54) **Hydrodynamische Kopplungsvorrichtung**
Hydrodynamic coupling device
Dispositif d'embrayage hydrodynamique

(30) Priorität: 03.03.2006 DE 102006009987
(43) Veröffentlichungstag der Anmeldung: 05.09.2007
(73) Patentinhaber: ZF Friedrichshafen AG, 88046 Friedrichshafen (DE)
(72) Erfinder: Frey, Peter, 97447 Gerolzhofen (DE); Heuler, Michael, 97080 Würzburg (DE); Reinhart, Edgar, 97461 Hofheim (DE); Reinhardt, Bernd, 97453 Schonungen (DE); Mundt, Stefan, 97072 Würzburg (DE); Baier, Thomas, 97493 Bergrheinfeld (DE); Zerner, Frank, 96120 Bischberg (DE)

(56) Entgegenhaltungen:
- DE-A1- 3 624 496
- DE-A1- 10 117 746
- DE-A1- 10 319 415
- DE-A1- 10 347 782
- DE-A1- 10 350 935
- DE-A1- 19 722 151
- DE-A1- 19 904 857
- DE-A1- 19 920 542
- DE-A1- 19 946 333
- DE-A1-102004 024 004
- DE-A1-102005 013 318
- JP-A- 2001 116 110

## Beschreibung

Die Erfindung bezieht sich auf eine hydrodynamische Kopplungsvorrichtung gemäß dem Oberbegriff des Anspruchs 1.

Eine hydrodynamische Kopplungsvorrichtung ist beispielsweise aus der DE 10 2004 029 157 A1 bekannt. Die hydrodynamische Kopplungsanordnung verfügt über einen hydrodynamischen Kreis, gebildet durch Pumpenrad, Turbinenrad und Leitrad, und ist als Drehmomentwandler realisiert, der mit einer Überbrückungskupplung ausgebildet ist, durch deren Kolben eine Mehrzahl von Reiborganen in Eingriff miteinander oder außer Eingriff voneinander versetzbar sind. Erste dieser Reiborgane sind drehfest an einem Gehäuse der hydrodynamischen Kopplungsvorrichtung aufgenommen, so dass dieses Gehäuse, das mit einem Antrieb, wie der Kurbelwelle einer Brennkraftmaschine drehverbunden ist, als antriebsseitiger Reiborganträger wirksam ist. Zweite Reiborgane sind drehfest an einem antriebsseitigen Übertragungselement eines Torsionsschwingungsdämpfers aufgenommen, der somit als abtriebsseitiger Reiborganträger wirkt. Zwischen jeweils zwei Reiborganträgern ist jeweils eine Reibfläche der Überbrückungskupplung wirksam. Das antriebsseitige Übertragungselement des Torsionsschwingungsdämpfers steht gemeinsam mit einer Energiespeichergruppe und einem abtriebsseitigen Übertragungselement des Torsionsschwingungsdämpfers mit einem Abtrieb, wie einer Getriebeeingangswelle, in drehfester Verbindung. Die Energiespeichergruppe ist sowohl in Ausnehmungen von Deckblechen gelagert, die mit dem abtriebsseitigen Reiborganträger drehfest sind, als auch in Ausnehmungen, die im abtriebsseitigen Übertragungselement vorgesehen sind.

Bei der bekannten hydrodynamischen Kopplungsvorrichtung sind die Ausnehmungen für die Energiespeichergruppe in den Deckblechen sowie im abtriebsseitigen Übertragungselement durchlässig für fluidförmiges Medium, das im Gehäuse enthalten ist. Aufgrund dieser Ausnehmungen besteht das Problem, dass ein nicht unbeträchtlicher Teil des von einem Strömungszufluss zu einem Strömungsabfluss bewegten fluidförmigen Mediums unter Umgehung der Reibflächen der Überbrückungskupplung die Ausnehmungen durchströmt. Insbesondere in Phasen, in denen die Reiborgane aufgrund eines Schlupfes erhitzt sind, kann sich hierdurch ein Mangel an kühlendem fluidförmigem Medium im Bereich der Reibflächen einstellen, so dass die an den Reibflächen entstandene Hitze nicht aus diesem Bereich abgeführt werden kann. Dadurch ist die Belastbarkeit der Reiborgane gegenüber besser gekühlten Reiborganen reduziert.

Dieses grundsätzliche Problem der Ausnehmungen für die Energiespeichergruppe tritt insbesondere aufgrund der Ausführung der bekannten hydrodynamischen Kopplungsvorrichtung als Drei-Leitungs-System in Erscheinung. Bei einem Drei-Leitungs-System ist nämlich ein Druckraum axial zwischen dem antriebsseitigen Deckel der Kopplungsvorrichtung und einem Kolben der Überbrückungskupplung gegenüber dem hydrodynamischen Kreis nicht nur abgedichtet, sondern auch an eine zusätzliche Druckleitung eines Hydrauliksystems angeschlossen, so dass der hydrodynamische Kreis sowohl einen Strömungszufluss als auch einen Strömungsabfluss aufweist.

Besser im Hinblick auf eine Wärmeabführung aus dem Bereich der Reibflächen ist daher ein Zwei-Leitungs-System, wie es in der DE 103 58 901 A1 bekannt ist. Bei einem Zwei-Leitungs-System ist nämlich der zwischen dem antriebsseitigen Deckel der Kopplungsvorrichtung und einem Kolben der Überbrückungskupplung vorgesehene Druckraum an eine Steuerleitung eines Hydrauliksystems angeschlossen, die entsprechend dem jeweiligen Betriebszustand der Kopplungsvorrichtung mit offener oder geschlossener Überbrückungskupplung als Strömungszufluss oder aber als Strömungsabfluss für fluidartiges Medium wirksam ist. Da ansonsten lediglich noch ein weiterer Strömungszu- oder abfluss in Zuordnung zum hydrodynamischen Kreis vorhanden ist, muss das fluidartige Medium auf seinem Weg in den hydrodynamischen Kreis hinein oder aus diesem heraus die Reibflächen der Überbrückungskupplung in Form einer Zwangsströmung durchfließen, da die Überbrückungskupplung beim Zwei-Leitungssystem als Trennstelle zwischen hydrodynamischen Kreis und Druckraum wirksam ist. Aus diesem Grund ist bei einem Zwei-Leitungssystem auch die Verwendung eines Torsionsschwingungsdämpfers unkritisch, der gemäß der DE 103 58 901 A1 über zwei mit Radialversatz zueinander angeordnete Energiespeichergruppen verfügt, nämlich eine antriebsseitige Energiespeichergruppe und eine abtriebsseitige Energiespeichergruppe aufweist, und beide Energiespeichergruppen jeweils in Ausnehmungen von Deckblechen und Nabenscheiben angeordnete sind, die eine Durchströmung mittels fluidförmigem Medium nicht verhindern können. Die beiden Energiespeichergruppen sind mittels eines Zwischen-Übertragungselementes miteinander verbunden.

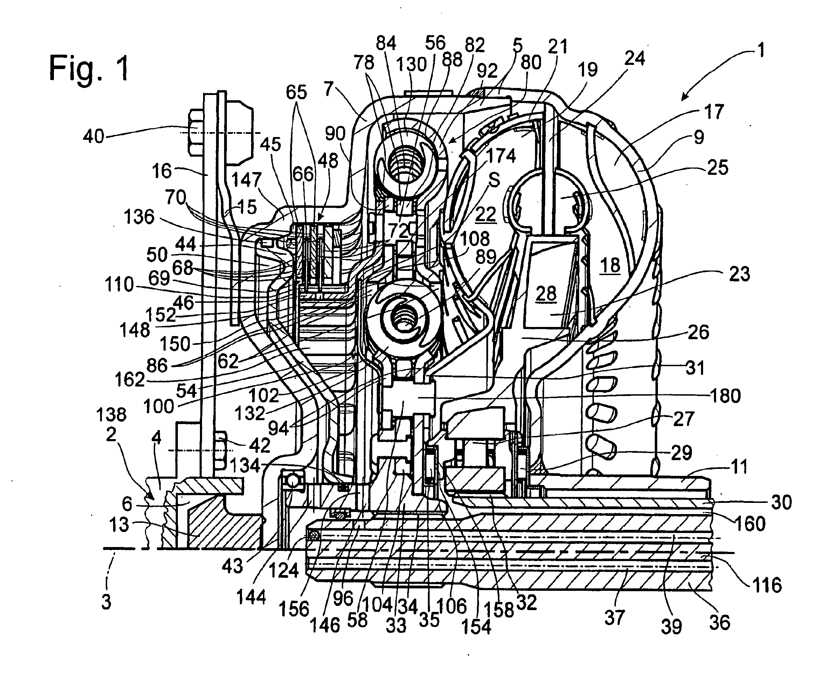

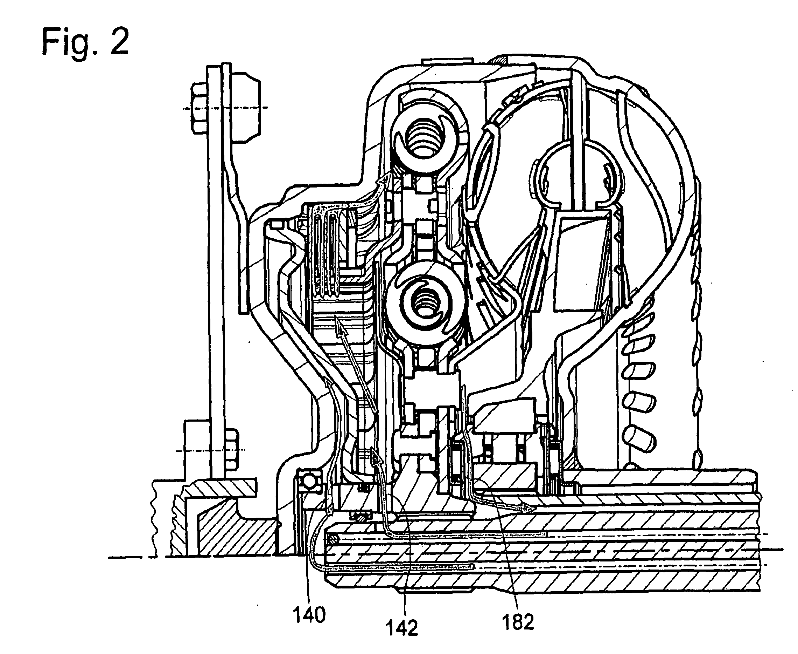

Zurückkehrend zu hydrodynamischen Kopplungsvorrichtungen mit dem kritischeren Drei-Leitungs-System zeigt die DE 199 20 542 A1 in Fig. 1 eine Ausführung, bei welcher eine nach diesem System wirksame Kopplungsvorrichtung mit einem Torsionsschwingungsdämpfer zusammen wirkt, der über zwei Energiespeichergruppen mit jeweils durchströmungsfördernden Ausnehmungen aufweist. Da diese Ausführung aufgrund der vorausgehenden Ausführungen im Hinblick auf eine Überhitzung von Reiborganen der Überbrückungskupplung besonders kritisch ist, zeigt Fig. 2 dieser Offenlegungsschrift einen Torsionsschwingungsdämpfer, bei welchem der radial äußeren Energiespeichergruppe ein geschlossenes Deckblech zugeordnet ist. Ein derartiges Deckblech beansprucht allerdings mehr axialen Bauraum als ein Deckblech mit Ausnehmungen für die Energiespeichergruppe, und zwar gerade in demjenigen Bereich des Torsionsschwingungsdämpfers, in welchem dieser aufgrund der Anwesenheit einer Energiespeichergruppe ohnehin bereits axial aufgeweitet ist. Vermutlich aus diesem Grund verzichtet der Torsionsschwingungsdämpfer gemäß dieser Offenlegungsschrift bei der radial inneren Energiespeichergruppe auf ein geschlossenes Deckblech.

Aus der DE 103 50 935 A1 ist eine hydrodynamische Kopplungsvorrichtung gemäß dem Oberbegriff des Anspruchs 1 bekannt, bei welcher Maßnahmen getroffen sind, um eine Ölzirkulation im Inneren eines Gehäuses derselben verstärkt über die Reibbeläge einer Überbrückungskupplung hinweg zu führen. Zwei tellerfederartige Dichtungselemente wirken dabei zwischen einer als abtriebsseitiges Übertragungselement eines Torsionsschwingungsdämpfers wirksamen Nabenscheibe und beidseits davon liegenden Scheibenelementen, welche einen Eingangsbereich des Torsionsschwingungsdämpfers bilden bzw. damit drehfest sind. Ein weiteres, membranartiges Dichtelement ist zwischen einem abtriebsseitigen Reiborganträger der Überbrückungskupplung und einem der Scheibenelemente des Eingangsbereichs des Torsionsschwingungsdämpfers festgelegt und erstreckt sich nach radial außen bis zu einem mit einem antriebsseitigen Reiborganträger drehfesten Bauteil.

Die DE 103 47 782 A1 offenbart eine hydrodynamische Kopplungsvorrichtung, bei welcher ein Scheibenelement eines Eingangsbereichs eines Torsionsschwingungsdämpfers mit einem abtriebsseitigen Reiborganträger einer Überbrückungskupplung drehfest verbunden ist. Dieses eingangsseitige Scheibenelement ist ohne Öffnungen für die Energiespeicher des Torsionsschwingungsdämpfers ausgebildet.

Der Erfindung liegt die Aufgabe zugrunde, eine als 3-Leitungs-System ausgebildete hydrodynamische Kopplungsvorrichtung mit einer Überbrückungskupplung und mit einem Torsionsschwingungsdämpfer derart auszubilden, dass ungeachtet der Anzahl an Energiespeichergruppen am Torsionsschwingungsdämpfer jeweils für eine hinreichende Durchströmung der Reibflächen der Überbrückungskupplung mit kühlendem fluidförmigem Medium gesorgt ist.

Diese Aufgabe wird durch die Merkmale des Anspruches 1 gelöst. Das fluidförmige Medium, das von dem als Strömungszufluss dienenden Strömungsdurchlass kommt, wird nahezu verlustfrei mittels einer Zwangsströmung zu den Reiborganen der Überbrückungskupplung und damit zu den Reibflächen geführt, so dass ein Abströmen zumindest eines wesentlichen Anteils des fluidförmigen Mediums über die Ausnehmungen in Übertragungselementen des Torsionsschwingungsdämpfers, wie Deckblechen oder Nabenscheiben, wirksam verhindert wird. Mit Vorzug wird hierbei derjenige Strömungsdurchlass als Strömungszufluss verwendet, zu dem, in Strömungsrichtung gesehen, die Reiborgane vor dem hydrodynamischen Kreis liegen, so dass frisch eingeleitetes fluidförmiges Medium zuerst zu den Reiborganen zur Kühlung der Reibflächen gelangt, und erst nach Durchströmung der Überbrückungskupplung in den hydrodynamischen Kreis gelangt, von wo aus fluidförmiges Medium über den als Strömungsabfluss dienenden Strömungsdurchlass wieder abgeführt werden kann. Bei einer derartigen Strömungsführung kann den Reiborganen der Überbrückungskupplung aufgrund des stets frischen fluidförmigen Mediums die jeweils bestmögliche Kühlwirkung zukommen. Bei umgekehrter Strömungsführung könnte dagegen das zuerst im hydrodynamischen Kreis ankommende fluidförmige Medium bereits erwärmt sein, bevor es die Reiborgane der Überbrückungskupplung erreicht. Bei einer derartigen Strömungsführung in der hydrodynamischen Kopplungsvorrichtung mit einem 3-Leitungs-System , bei welchem der hydrodynamische Kreis bezüglich der Zuführung und Abführung fluidförmigen Mediums unabhängig von der Ansteuerung eines Kolbens der Überbrückungskupplung versorgt werden kann , wird, anders als bei einer hydrodynamischen Kopplungsvorrichtung mit 2-Leitungs-System, keine Zwangsströmung des fluidförmigen Mediums über die Reiborgane veranlasst.

Bei Realisierung der als 3-Leitungs-System ausgebildeten hydrodynamischen Kopplungsvorrichtung ist es vorteilhaft, zumindest zwei unterschiedliche Reiborgane miteinander in Wirkverbindung zu bringen, von denen erste Reiborgane mit dem als antriebsseitiger Reiborganträger wirksamen Gehäuse der Kopplungsvorrichtung und daher mit einem Antrieb, wie einer Kurbelwelle einer Brennkraftmaschine, in Drehverbindung stehen, zweite Reiborgane dagegen mit einem als abtriebsseitiger Reiborganträger wirksamen antriebsseitigen Übertragungselement des Torsionsschwingungsdämpfers. Zwischen jeweils zwei unterschiedlichen Reiborganen liegt eine gemeinsame Reibfläche vor, die mit zunehmender Relativbewegung der Reiborgane zueinander, also mit zunehmendem Kupplungsschlupf eine zunehmende Erhitzung erfahren können. Bei Ausbildung der Reiborgane als Lamellen verfügt die Überbrückungskupplung dann über ein Lamellenpacket, die Reiborganträger sind als Lamellenträger wirksam.

Die Dichtanordnung ist bevorzugt an einem zum abtriebsseitigen Reiborganträger bewegbaren Übertragungselement des Torsionsschwingungsdämpfers angeordnet. Bei einem Torsionsschwingungsdämpfer mit lediglich nur einer Energiespeichergruppe würde dieses relativ zum abtriebsseitigen Reiborganträger bewegbare Übertragungselement durch das abtriebsseitige Übertragungselement des Torsionsschwingungsdämpfers gebildet, bei einem Torsionsschwingungsdämpfer mit zwei Energiespeichergruppen dagegen durch ein die beiden Energiespeichergruppen miteinander koppelndes Zwischen-Übertragungselement, das über eine Mehrzahl von Deckblechen verfügen kann, von denen jedes mit Ausnehmungen zur Aufnahme der jeweiligen Energiespeichergruppe ausgebildet sein kann. Dieses Zwischen-Übertragungselement wirkt mit Vorzug für die antriebsseitige Energiespeichergruppe als Ausgangs-Übertragungselement, für die abtriebsseitige Energiespeichergruppe dagegen als Eingangs-Übertragungselement.

Bei Aufnahme der Dichtanordnung entweder am abtriebsseitigen Übertragungselement eines Torsionsschwingungsdämpfers oder dessen Zwischen-Übertragungselement liegt eine Relativbewegbarkeit des Übertragungselementes zu dem antriebsseitigen Übertragungselement vor. Um trotz dieser Relativbewegbarkeit weder einen Verschleiß zwischen der Dichtanordnung und dem zugeordneten Übertragungselement, noch eine Reibwirkung zulassen zu müssen, ist es vorteilhaft, die Dichtanordnung lediglich an das antriebsseitige Übertragungselement anzunähern, ohne einen Berührungskontakt zwischen diesen beiden Bauteilen zustande kommen zu lassen. Sofern eine sich von einer Befestigungsstelle der Dichtanordnung am abtriebsseitigen Übertragungselement oder am Zwischen-Übertragungelement fort erstreckende Dichtanordnung mit ihrem jeweils von der Befestigungsstelle entfernten Bereich so weit an das antriebsseitige Übertragungselement des Torsionsschwingungsdämpfers angenähert ist, dass zwischen diesem Bereich und dem Übertragungselement lediglich ein Spalt verbleibt, liegt für fluidförmiges Medium eine Spaltdichtung vor, die lediglich einen vernachlässigbar geringen Anteil des fluidförmigen Mediums passieren lässt, und somit dafür sorgt, dass der weitaus überwiegende Anteil des fluidförmigen Mediums an der Spaltdichtung vorbei strömt und dadurch zu den Reiborganen der Überbrückungskupplung gelangt. Es ist hierbei unerheblich, ob der von der Befestigungsstelle der Dichtanordnung abgewandte Bereich eine sich zumindest im wesentlichen axial erstreckende Spaltdichtung oder aber eine sich zumindest im wesentlichen radial erstreckende Spaltdichtung bildet. Im wesentlichen werden sich die beiden unterschiedlich ausgerichteten Spaltdichtungen am jeweiligen Bauraum des Torsionsschwingungsdämpfers in Radial- oder in Axialrichtung orientieren. Alternativ kann allerdings auch eine Berührungsdichtung Verwendung finden, durch welche eine noch bessere Abdichtung erzielbar ist als durch eine Spaltdichtung.

Wirkungsmäßig mit der Dichtanordnung verknüpft ist, wie bereits beschrieben, der bevorzugt als antriebsseitiges Übertragungselement wirksame abtriebsseitige Reiborganträger. Mit Vorzug verfügt dieser über Strömungsdurchgänge für das angelieferte fluidförmige Medium, damit dieses auf kürzestmöglichem Weg zu den Reiborganen, insbesondere zu den zwischen den Reiborganen wirksamen Reibflächen gelangen kann. Mit besonderem Vorteil sind die Strömungdurchgänge derart im abtriebsseitigen Reiborganträger vorgesehen, dass durchströmendes fluidförmiges Medium unmittelbar auf die Reibflächen zwischen je zwei Reiborganen ausgerichtet ist. Bei Ausführung der Spaltdichtung mit axialer Orientierung oder bei Verwendung einer Berührungsdichtung mit axialer Wirkung kann der abtriebsseitige Reiborganträger sowohl mit einer Verzahnung als auch mit einer Ausklinkung zur drehfesten Mitnahme der entsprechenden Reiborgane versehen sein, sofern die Spaltdichtung oder die Berührungsdichtung an der verzahnungs- oder ausklinkungsfreien Seite des Reiborganträgers vorgesehen ist. Im Gegensatz dazu ist bei Ausführung der Spaltdichtung mit radialer Orientierung oder bei Verwendung einer Berührungsdichtung mit radialer Wirkung einem abtriebsseitigen Reiborganträger mit einer Ausklinkung der Vorzug zu geben, da dieser in vorteilhafter Wirkung an seiner der jeweiligen Dichtung zugewandten Seite über eine unprofilierte Annäherungsfläche verfügt, die eine die benötigte Dichtwirkung gewährleistende Annäherung der Dichtung an die entsprechende Radialseite des Reiborganträgers ermöglicht.

Die Erfindung ist anhand von Ausführungsbeispielen näher erläutert. Es zeigt:
- Fig. 1: die obere Hälfte eines Längsschnittes durch eine hydrodynamische Kopplungsanordnung mit einer Überbrückungskupplung und einem Torsionsschwingungsdämpfer, der über zwei Energiespeichergruppen verfügt, von denen der abtriebsseitigen Energiespeichergruppe eine Dichtanordnung mit axialer Spaltdichtung gegenüber einem antriebsseitigen Übertragungselement des Torsionsschwingungsdämpfers zugeordnet ist;
- Fig. 2: wie Fig. 1, aber mit eingezeichnetem Strömungsverlauf ,
- Fig. 3: eine Herauszeichnung eines abtriebsseitigen Reiborganträgers der Überbrückungskupplung, welcher dem in Fig. 1 gezeigten antriebsseitigen Übertragungselement des Torsionsschwingungsdämpfers zugeordnet ist, abweichend von der Ausführung in Fig. 1 aber mit einem Bund zwischen einem radialen Bereich und einer in Umfangsrichtung unterbrechungsfreien Verzahnung ausgebildet ist;
- Fig. 4: wie Fig. 3, aber mit einer durch Ausklinkungen in Umfangsrichtung gebildeten Verzahnung;
- Fig.5: wie Fig. 1, aber mit einer radialen Spaltdichtung gegenüber dem antriebsseitigen Übertragungselement des Torsionsschwingungsdämpfers;
- Fig. 6: wie Fig. 5, aber mit einer radialen Berührungsdichtung gegenüber dem antriebsseitigen Übertragungselement des Torsionsschwingungsdämpfers;
- Fig. 7: wie Fig. 6, aber mit einer axialen Berührungsdichtung gegenüber dem antriebsseitigen Übertragungselement des Torsionsschwingungsdämpfers.

In Fig. 1 ist eine hydrodynamische Kopplungsvorrichtung 1 in Form eines hydrodynamischen Drehmomentwandlers dargestellt, der um eine Drehachse 3 Rotationsbewegungen auszuführen vermag. Die hydrodynamische Kopplungsvorrichtung 1 verfügt über ein Kupplungsgehäuse 5, das an seiner einem Antrieb 2, wie beispielsweise der Kurbelwelle 4 einer Brennkraftmaschine, zugewandten Seite, einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich einen Lagerzapfen 13 auf, der in bekannter Weise in einer Aussparung 6 der Kurbelwelle 4 zur antriebsseitigen Zentrierung des Kupplungsgehäuses 5 aufgenommen ist. Weiterhin verfügt der Gehäusedeckel 7 über eine Befestigungsaufnahme 15, die zur Befestigung des Kupplungsgehäuses 5 am Antrieb 2 dient, und zwar über die Flexplatte 16. Diese ist mittels Befestigungselementen 40 an der Befestigungsaufnahme 15 und mittels Befestigungselementen 42 an der Kurbelwelle 4 befestigt.

Die bereits erwähnte Pumpenradschale 9 bildet zusammen mit Pumpenradschaufeln 18 ein Pumpenrad 17, das mit einem eine Turbinenradschale 21 und Turbinenradschaufeln 22 aufweisenden Turbinenrad 19 sowie mit einem mit Leitradschaufeln 28 versehenen Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Die Leitradschaufeln 28 des Leitrades 23 sind auf einer Leitradnabe 26 vorgesehen, die auf einem Freilauf 27 angeordnet ist. Der Freilauf 27 stützt sich über eine für fluidförmiges Medium durchlässige Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist. Die als Hohlwelle ausgebildete Stützwelle 30 ihrerseits umschließt, unter Ausbildung eines im wesentlichen ringförmigen Kanals 160, eine als Abtrieb 116 der hydrodynamischen Kopplungsvorrichtung 1 dienende Getriebeeingangswelle 36, die über zwei mit Radialversatz zueinander angeordnete Axialdurchgänge 37, 39 für fluidförmiges Medium verfügt. Die Getriebeeingangswelle 36 nimmt über eine Verzahnung 34 eine Torsionsdämpfernabe 33 eines Torsionsschwingungsdämpfers 80 drehfest, aber axial verschiebbar auf, wobei diese Torsionsdämpfernabe 33 zur relativ drehbaren Aufnahme eines Turbinenradfußes 31 dient. Die Torsionsdämpfernabe 33 stützt sich einerseits über eine Axiallagerung 35 am bereits genannten Freilauf 27 ab, und kommt andererseits über eine Stützlagerung 43 am Gehäusedeckel 7 in Anlage. Des weiteren trägt die Torsionsdämpfernabe 33 einen Kolben 54 einer Überbrückungskupplung 48, der über eine radial innere Kolbendichtung 134 gegenüber der Torsionsdämpfernabe 33 und über eine radial äußere Kolbendichtung 136 gegenüber dem Gehäusedeckel 7 abgedichtet ist.

Über die erste Axialbohrung 37 der Getriebeeingangswelle 36 eingeströmtes fluidförmiges Medium (Fig. 2) gelangt nach Austritt am antriebsseitigen Ende der Getriebeeingangswelle 36 und Umlenkung am Gehäusedeckel 7 im wesentlichen in Radialrichtung über einen Strömungsdurchfluss 144, der einen Strömungsweg 140 vorgibt, in eine Druckkammer 50, die axial zwischen dem Gehäusedeckel 7 und dem Kolben 54 der Überbrückungskupplung 48 angeordnet ist. Der Kolben 54 ist mit seiner von der Druckkammer 50 abgewandten Seite einer weiteren Druckkammer 162 zugewandt und in Abhängigkeit von den Druckverhältnissen in der weiteren Druckkammer 162 sowie in der Druckkammer 50 zum Ein- oder Ausrücken der Überbrückungskupplung 48 zwischen zwei unterschiedlichen Grenzstellungen axial bewegbar.

Der Kolben 54 wirkt über einen radial äußeren Druckbereich 44 an seiner dem Torsionsschwingungsdämpfer 80 zugewandten Seite auf ein erstes Reiborgan 65 in Form einer radial äußeren Lamelle ein, das sich seinerseits an einem zweiten Reiborgan 66 in Form einer radial inneren Lamelle abstützt. Weitere erste und zweite Reiborgane 65, 66 schließen sich an, wobei mit Vorzug die zweiten Reiborgane 66 an ihren Axialseiten jeweils Reibbeläge 68 aufnehmen, während mit Vorzug die ersten Reiborgane 65 Reibflächen 70 zur Anlage der Reibbeläge 68 der zweiten Reiborgane 66 aufweisen. Die Reiborgane 65, 66 bilden gemeinsam den Reibbereich 69 der Überbrückungskupplung 48.

Die ersten Reiborgane 65 sind über eine Verzahnung 45 mit dem als antriebsseitiger Reiborganträger 147 dienenden Gehäuse 5 drehfest, die zweiten Reiborgane 66 dagegen über eine Verzahnung 46 mit einem abtriebsseitigen Reiborganträger 148 drehfest. Der abtriebsseitige Reiborganträger 148 ist über eine Vernietung 56 drehfest mit einer radial äußeren Nabenscheibe 82 des Torsionsschwingungsdämpfers 80 verbunden, und dient somit gemeinsam mit dieser als antriebsseitiges Übertragungselement 78 des Torsionsschwingungsdämpfers 80.

Das antriebsseitige Übertragungselement 78 verfügt über sich im Wesentlichen radial erstreckende Bereiche, die als Ansteuerelemente 84 für eine erste Energiespeichergruppe 130, nachfolgend als antriebsseitige Energiespeichergruppe 130 bezeichnet, wirksam sind. Die antriebsseitige Energiespeichergruppe 130 verläuft im Wesentlichen in Umfangsrichtung und stützt sich anderenends an Ansteuerelementen 88 eines antriebsseitigen Deckbleches 90 sowie eines mit demselben drehfesten abtriebsseitigen Deckbleches 92 ab, wobei das letztgenannte die antriebsseitige Energiespeichergruppe 130 auf einem Teil ihres Umfangs umfasst. Die drehfeste Verbindung der beiden Deckbleche 90 und 92, die gemeinsam als Zwischen-Übertragungselement 94 des Torsionsschwingungsdämpfers 80 dienen, erfolgt über eine Verzapfung 58, die darüber hinaus antriebsseitig auch ein als Dichtanordnung 100 wirksames Dichtblech 102, dessen Funktion nachfolgend noch erläutert wird, und den Turbinenradfuß 31 drehfest an die Deckbleche 90 und 92 anbindet.

Die als Zwischen-Übertragungselement 94 wirksamen Deckbleche 90, 92 sind, radial außerhalb der Verzapfung 58, mit Ausnehmungen 62 in Form von Federfenstern für eine zweite Energiespeichergruppe 132, die nachfolgend als abtriebsseitige Energiespeichergruppe 132 bezeichnet ist, versehen, wobei die umfangsseitigen Begrenzungen der Ausnehmungen 62 als Ansteuerelemente 86 für die abtriebsseitige Energiespeichergruppe 132 wirksam sind, die sich andererseits an Ansteuerelementen 89 der Nabenscheibe 104 abstützen. Die Nabenscheibe 104 bildet gemeinsam mit der Torsionsdämpfernabe 33 ein abtriebsseitiges Übertragungselement 106 des Torsionsschwingungsdämpfers 80.

Zur Überdeckung der Ausnehmungen 62 der zweiten Energiespeichergruppe 132 gegenüber der Überbrückungskupplung 48 greift das Dichtblech 102, ausgehend von der als Befestigungsstelle 180 für das Dichtblech 102 dienenden Verzapfung 58, nach radial außen und überlappt in dieser Richtung einen radial äußeren Bereich 108 eines sich im wesentlichen radial erstreckenden Abschnittes 110 des abtriebsseitigen Reiborganträgers 148. Axial ist der radial äußere Bereich 108 des Dichtbleches 102 bis auf einen Spalt an den radialen Abschnitt 110 des abtriebsseitigen Reiborganträgers 148 herangeführt. Dadurch entsteht eine axiale Spaltdichtung 174.

Die bereits erwähnte Axialbohrung 39 der Getriebeeingangswelle 36 endet an ihrem dem Antrieb 2 zugewandten Ende durch einen Verschluß 124. Dieser erzwingt einen Austritt des durch die Axialbohrung 39 angelieferten fluidförmigen Mediums durch eine Radialöffnung 96 in der Getriebeeingangswelle 36 (Fig. 2), von wo aus das fluidförmige Medium über einen ersten Strömungsdurchlass 146, der einen ersten Strömungsweg 142 vorgibt, nach radial außen in die Kupplungskammer 162 strömt, wobei der erste Strömungsdurchlass 146 als Strömungszufluss 156 dient, und gleichzeitig für einen Druckaufbau in der Kupplungskammer 162 sorgt.

Das fluidförmige Medium gelangt, nach Durchgang durch die Kupplungskammer 162, zu Strömungsdurchgängen 150, die in einem im wesentlichen axial verlaufenden Abschnitt 152 des abtriebsseitigen Reiborganträgers 148 vorgesehen sind, und zwar im wesentlichen radial fluchtend mit den jeweiligen Reibflächen 70 des Reibbereiches 69 der Überbrückungskupplung 48. Auf diese Weise wird der Reibbereich 69 effizient gekühlt, insbesondere wenn die Reibbeläge 68 der zweiten Reiborgane 66 mit Nutungen 72 versehen sind. Alternativ oder ergänzend können auch die Reibflächen 70 der ersten Reiborgane 65 mit Nutungen zum Durchtritt des fluidförmigen Mediums ausgebildet sein.

Nach Passage des Reibbereiches 69 der Überbrückungskupplung 48 gelangt das fluidförmige Medium zur Versorgung des hydrodynamischen Kreises 24 in denselben. Dort wird das fluidförmige Medium für einen zweiten Strömungsweg 182 (Fig. 2) nach radial innen zur Axiallagerung 35 umgelenkt, die über einen zweiten Strömungsdurchlass 154 (Fig. 2) verfügt. Dieser zweite Strömungsdurchlass 154 dient für das fluidförmige Medium als Strömungsabfluss 158 aus dem hydrodynamischen Kreis 24. Das fluidförmige Medium verlässt über den Kanal 160 das Kupplungsgehäuse 5.

Dem Dichtblech 102 kommt die Funktion zu, einen Übertritt fluidförmigen Mediums aus dem weiteren Druckraum 162 in den hydrodynamischen Kreis 24 insbesondere über die Ausnehmungen 62 für die zweite Energiespeichergruppe 132 zu verhindern. Auf diese Weise wird nahezu der gesamte Zustrom des fluidförmigen Mediums über die Strömungsdurchgänge 150 des abtriebsseitigen Reiborganträgers 148 zu den Reibflächen 70 des Reibbereiches 69 der Überbrückungskupplung 48 geleitet, um dort reibungsbedingt entstandene Hitze aufzunehmen, bevor das fluidförmige Medium dem hydrodynamischen Kreis 24 zugeführt wird. Entsprechend hoch ist hierbei die Kühlwirkung an der Überbrückungskupplung 48 und damit das von derselben übertragbare Moment. Durch Annäherung des radial äußeren Endes 108 des Dichtbleches 102 bis auf einen Spalt S besteht kein reibungsfördernder Kontakt zwischen dem mit dem Zwischen-Übertragungselement 94 drehfesten Dichtblech 102 und dem als antriebsseitiges Übertragungselement 78 wirksamen und damit gegenüber dem Zwischen-Übertragungselement 94 relativ verdrehbaren abtriebsseitigen Reiborganträger 148. Dadurch werden verschleißbedingte Schäden am Torsionsschwingungsdämpfer 80 bei uneingeschränkter Entkopplungsgüte vermieden.

Da der radial äußere Bereich 108 des Dichtbleches 102 axial an den abtriebsseitigen Reiborganträger 148 angenähert ist, wirkt sich dessen Ausbildung im Bereich der Verzahnung 46 nicht aus.

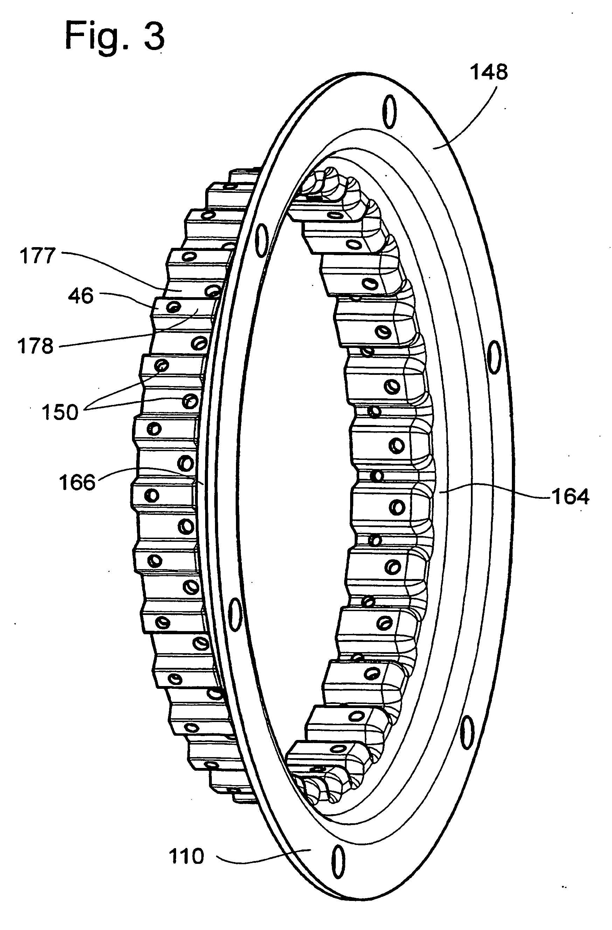

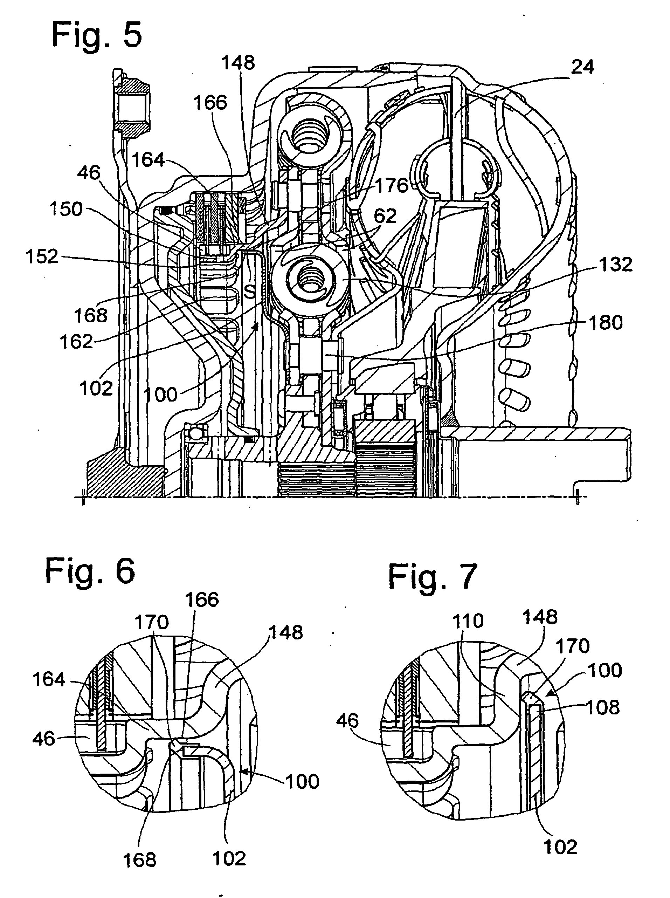

Im Gegensatz zu dem in Fig. 1 abgebildeten, abtriebsseitigen Reiborganträger 148 mit axial im wesentlichen durchgängiger Verzahnung 46 weist der Reiborganträger nach Fig. 3 bis 6 im axialen Anschluss an den zumindest im wesentlichen radial verlaufenden Abschnitt 110 einen ringförmigen Bund 164 auf, der eine radiale Annäherungsfläche 166 für ein Dichtblech 102 der Dichtanordnung 100 bildet, das, wie Fig. 5 zeigt, einen axial äußeren Bereich 168 aufweist, der sich im wesentlichen axial erstreckt und zur Bildung einer radialen Spaltdichtung 176 bis auf einen Spalt S radial an die radiale Annäherungsfläche 166 des ringförmigen Bundes 164 angenähert ist. Auch bei dieser Ausführung wird in die weitere Druckkammer 162 eingetretenes fluidförmiges Medium unmittelbar zu den Strömungsdurchgängen 150 im axial verlaufenden Abschnitt 152 des abtriebsseitigen Reiborganträgers 148 geleitet, ohne dass ein wesentlicher Anteil des fluidförmigen Mediums über die Ausnehmungen 62 für die zweite Energiespeichergruppe 132 in den hydrodynamischen Kreis 24 abströmen könnte.

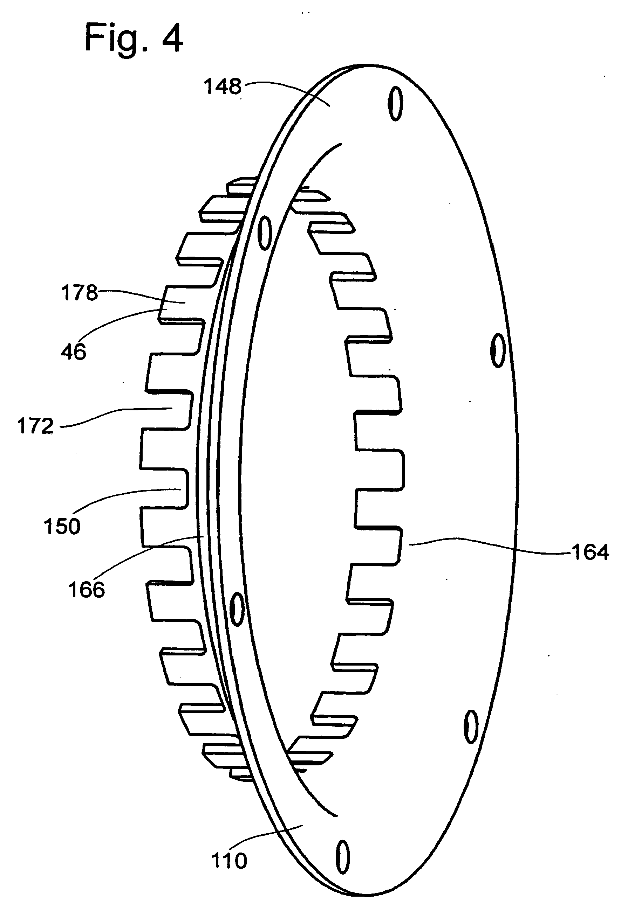

Ein Unterschied zwischen den Darstellungen in den Fig. 3 und 4 besteht in der Ausbildung der Verzahnung 46 am jeweils gezeigten abtriebsseitige Reiborganträger 148.

Der in Fig. 3 dargestellte abtriebsseitige Reiborganträger 148 verfügt über eine in Umfangsrichtung unterbrechungsfreie Verzahnung 46, bei welcher Zähne 178 im Wechsel mit Radialabsenkungen 177 ausgebildet sind. Wegen der Unterbrechungsfreiheit der Verzahnung 46 in Umfangsrichtung ist die Verzahnung 46 mit Strömungsdurchgängen 150 in Form von Radialbohrungen versehen. Eine derartige Verzahnung 46 wird mit Vorzug durch ein Tiefziehverfahren hergestellt.

Der in Fig. 4 gezeigte abtriebsseitige Reiborganträger 148 weist zwischen jeweils zwei Zähnen 178 je eine Ausklinkung 172 auf, die zu einer Unterbrechung der Verzahnung 46 führt. Die Ausklinkungen 172 dienen in einer Hauptfunktion zum Eingriff nicht gezeigter Radialvorsprünge an den zweiten Reiborganen 66, und in einer Zusatzfunktion als Strömungsdurchgänge 150 für das fluidförmige Medium.

Wie Fig. 6 zeigt, kann der axial äußere Bereich 168 des Dichtbleches 102 der Dichtanordnung 100 von einem Berührungs-Dichtelement 170, vorzugsweise von einem elastomeren Dichtelement, umkleidet sein, das mit der radialen Annäherungsfläche 166 des ringförmigen Bundes 164 in Berührungsverbindung steht. Selbstverständlich kann, wie Fig. 7 zeigt, auch bei der in Fig. 1 gezeigten Ausführung ein Berührungs-Dichtelement 170 Verwendung finden, indem dieses am radial äußeren Bereich 108 des Dichtbleches 102 befestigt ist, und mit dem radial verlaufenden Abschnitt 110 des abtriebsseitigen Reiborganträgers 148 in Berührungsverbindung steht.

### Bezugszeichenliste

1 hydrod. Kopplungsvorrichtung
2 Antrieb
3 Drehachse
4 Kurbelwelle
5 Kupplungsgehäuse
6 Aussparung
7 Gehäusedeckel
9 Pumpenradschale
11 Pumpenradnabe
13 Lagerzapfen
15 Befestigungsaufnahme
16 Flexplatte
17 Pumpenrad
18 Pumpenradschaufeln
19 Turbinenrad
21 Turbinenradschale
22 Turbinenradschaufeln
23 Leitrad
24 hydrodyn. Kreis
25 Innentorus
26 Leitradnabe
27 Freilauf
28 Leitradschaufeln
29 Axiallagerung
30 Stützwelle
31 Turbinenradfuß
32 Verzahnung
33 Torsionsdämpfernabe
34 Verzahnung
35 Axiallagerung
36 Getriebeeingangswelle
37 Axialdurchgang
38 Dichtanordnung
39 Axialdurchgang
40, 42 Befestigungselemente
43 Stützlagerung
44 Druckbereich des Kolbens
45,46 Verzahnung
48 Überbrückungskupplung
50 Druckkammer
54 Kolben
56 Vernietung
58 Verzapfung
60, 61 Ansteuerelemente
62 Ausnehmungen
65, 66 Reiborgane
68 Reibbeläge
69 Reibbereich
70 Reibflächen
72 Nutungen
78 antriebsseitiges Übertragungselement
80 Torsionsschwingungsdämpfer
82 radial äußere Nabenscheibe
84, 86 Ansteuerelemente
88, 89 Ansteuerelemente
90,92 Deckbleche
94 Zwischen-Übertragungselement
96 Radialöffnung
100 Dichtanordnung
102 Dichtblech
104 radial innere Nabenscheibe
106 abtriebss. Übertragungselement
108 radial äußerer Bereich
110 radial erstreckender Abschnitt des abtriebss. Reiborganträgers
116 Abtrieb
124 Verschluss
130 antriebsseitige Energiespeichergruppe
132 abtriebsseitige Energiespeichergruppe
134 radial innere Kolbendichtung
136 radial äußere Kolbendichtung
137 einziger Kennlinienabschnitt
140 Strömungsweg
142 erster Strömungsweg
144 Strömungsdurchfluss
146 erster Strömungsdurchlass
147 antriebsseitiger Reiborganträger
148 abtriebsseitiger Reiborganträger
150 Strömungsdurchgänge
152 axial verlaufender Abschnitt des abtriebss. Reiborganträgers
154 zweiter Strömungsdurchlass
156 Strömungszufluss
158 Strömungsabfluss
160 Kanal
162 weitere Druckkammer
164 ringförmiger Bund
166 radiale Annäherungsfläche
168 axial äußerer Bereich
170 Berührungs-Dichtelement
172 Ausklinkungen
174 axiale Spaltdichtung
176 radiale Spaltdichtung
177 Radialabsenkungen
178 Zähne
180 Befestigungsstelle
182 zweiter Strömungsweg

## Patentansprüche

1. Als 3-Leitungs-System ausgebildete hydrodynamische Kopplungsvorrichtung (1) mit einem Kupplungsgehäuse (5), das mit einem Antrieb (2) in Wirkverbindung bringbar ist und einen durch zumindest ein Pumpenrad (17) und ein Turbinenrad (19) gebildeten hydrodynamischen Kreis, eine über einen Reibbereich (69) verfügende Überbrückungskupplung (48) und einen Torsionsschwingungsdämpfer (80) umschtießt, wobei die Überbrückungskupplung (48) mit einem antriebsseitigen Übertragungselement (78) des Torsionsschwingungsdämpfers (80) verbunden ist, und das antriebsseitige Übertragungselement (78) über mindestens eine Energiespeichergruppe (130,132) mit einem abtriebsseitigen Übertragungselement (106) des Torsionsschwingungsdämpfers (80) in Wirkverbindung steht, wobei das abtriebsseitige Übertragungselement (106) mit einem Abtrieb (116) verbunden ist,
wobei
der zumindest einen Energiespeichergruppe (130,132) des Torsionsschwingungsdämpfers (80) wenigstens eine Dichtanordnung (100) zugeordnet ist, welche einen Erstreckungsbereich der wenigstens einen Energiespeichergruppe (130; 132) übergreift, um eine Trennung eines ersten Strömungsweges (142) für fluidförmiges Medium zwischen zumindest einem ersten Strömungsdurchlass (146) und dem Reibbereich (69) und eines zweiten Strömungsweges (182) für fluidförmiges Medium zwischen zumindest einem zweiten Strömungsdurchlass (154) und dem hydrodynamischen Kreis (24) für den zumindest überwiegenden Anteil des die beiden Strömungswege (142, 182) passierenden fluidförmigen Mediums zu bewirken,
**dadurch gekennzeichnet,**
**dass** die Dichtanordnung (100) an einem relativ zum antriebsseitigen Übertragungselement (78) bewegbaren weiteren Übertragungselement (94) des Torsionsschwingungsdämpfers (80) aufgenommen ist, und mit dem antriebsseitigen Übertragungselement (78) zur Trennung des die beiden Strömungswege (142, 182) passierenden fluidförmigen Mediums zusammen wirkt.

2. Hydrodynamische Kopplungsvorrichtung nach Anspruch 1, mit einer Überbrückungskupplung, die über eine Mehrzahl von Reiborganen verfügt, von denen erste Reiborgane mit dem als antriebsseitigen Reiborganträger dienenden Gehäuse und zweite Reiborgane mit dem als abtriebsseitigen Reiborganträger dienenden antriebsseitigen Übertragungselement des Torsionsschwingungsdämpfers verbunden sind,
wobei die Dichtanordnung (100) mit dem abtriebsseitigen Reiborganträger (148) zur Trennung des die beiden Srömungswege (142, 182) passierenden fluidförmigen Mediums zusammen wirkt.

3. Hydrodynamische Kopplungsvorrichtung nach Anspruch 1 oder 2 mit einem Torsionsschwingungsdämpfer, bei dem das antriebsseitige Übertragungselement einer antriebsseitigen Energiespeichergruppe und das abtriebsseitige Übertragungselement einer abtriebsseitigen Energiespeichergruppe zugeordnet ist, wobei die beiden Energiespeichergruppen durch ein Zwischen-Übertragungselement miteinander verbunden sind, das für die antriebsseitige Energiespeichergruppe als Ausgangs-Übertragungselement und für die abtriebsseitige Energiespeichergruppe als Eingangs-Übertragungselement dient,
**dadurch gekennzeichnet,**
**dass** das Zwischen-Übertragungselement (94) zur Aufnahme der Dichtanordnung (100) vorgesehen ist.

4. Hydrodynamische Kopplungsvorrichtung nach einem der Ansprüche 1 bis 3,
**dadurch gekennzeichnet,**
**dass** die Dichtanordnung (100), ausgehend von einer Befestigungsstelle (180) am Torsionsschwingungsdämpfer (80), mit einem von dieser Befestigungsstelle (180) entfernten Bereich (108; 168) bis auf einen Spalt (S) an das antriebsseitige Übertragungselement (78) angenähert ist, so dass zwischen diesem Bereich (108; 168) der Dichtanordnung (100) und dem Übertragungselement (78) eine Spaltdichtung (176; 178) entsteht.

5. Hydrodynamische Kopplungsvorrichtung nach einem der Ansprüche 1 bis 3,
**dadurch gekennzeichnet,**
**dass** die Dichtanordnung (100), ausgehend von ihrer Befestigungsstelle (180) am Torsionsschwingungsdämpfer (80), mit ihrem von dieser Befestigungsstelle (180) entfernten Bereich (108; 168) über ein Berührungs-Dichtelement (170) an dem antriebsseitigen Übertragungselement (78) in Anlage kommt.

6. Hydrodynamische Kopplungsvorrichtung nach Anspruch 4,
**dadurch gekennzeichnet,**
**dass** die Dichtanordnung (100) mit ihrem von der Befestigungsstelle (180) am Torsionsschwingungsdämpfer (100) entfernten Bereich (108) axial an das antriebsseitige Übertragungselement (78) angenähert ist, so dass eine zumindest im wesentlichen axiale Spaltdichtung (174) entsteht.

7. Hydrodynamische Kopplungsvorrichtung nach Anspruch 4,
**dadurch gekennzeichnet,**
**dass** die Dichtanordnung (100) mit ihrem von der Befestigungsstelle (180) am Torsionsschwingungsdämpfer (80) entfernten Bereich (168) zumindest im wesentlichen radial an das antriebsseitige Übertragungselement (78) angenähert ist, so dass eine zumindest im wesentlichen radiale Spaltdichtung (176) entsteht.

8. Hydrodynamische Kopplungsvorrichtung nach Anspruch 5,
**dadurch gekennzeichnet,**
**dass** die Dichtanordnung (100) mit ihrem von der Befestigungsstelle (180) am Torsionsschwingungsdämpfer (80) entfernten Bereich (108) zumindest im wesentlichen axial über ein Berührungs-Dichtelement (170) an dem antriebsseitigen Übertragungselement (78) angreift.

9. Hydrodynamische Kopplungsvorrichtung nach Anspruch 5,
**dadurch gekennzeichnet,**
**dass** die Dichtanordnung (100) mit ihrem von der Befestigungsstelle (180) am Torsionsschwingungsdämpfer (80) entfernten Bereich (168) zumindest im wesentlichen radial über ein Berührungs-Dichtelement (170) an dem antriebsseitigen Übertragungselement (78) angreift.

10. Hydrodynamische Kopplungsvorrichtung nach einem der Ansprüche 1 bis 9,
**dadurch gekennzeichnet,**
**dass** der erste Strömungsdurchlass (146) als Strömungszufluss (156) für das fluidförmige Medium zum hydrodynamischen Kreis (24) und der zweite Strömungsdurchlass (154) als Strömungsabfluss (158) für das fluidförmige Medium vom hydrodynamischen Kreis (24) wirksam ist.

11. Hydrodynamische Kopplungsvorrichtung nach einem der Ansprüche 1 bis 10,
**dadurch gekennzeichnet,**
**dass** ein dem antriebsseitigen Übertragungselement (78) zugeordnetes Bauteil (148) mit Strömungsdurchgängen (150) ausgebildet ist, über welche das fluidförmige Medium zu den Reibflächen (70) des Reibbereiches (69) leitbar ist.

12. Hydrodynamische Kopplungsvorrichtung nach einem der Ansprüche 1 bis 11,
**dadurch gekennzeichnet,**
**dass** die Strörnungsdurchgänge (150) zumindest im wesentlichen auf die Reibflächen (70) der Reiborgane (66) ausgerichtet sind.

13. Hydrodynamische Kopplungsvorrichtung nach einem der Ansprüche 1 bis 12,
**dadurch gekennzeichnet,**
**dass** dem antriebsseitigen Übertragungselement (78) zugeordnete Bauteil (148) durch den abtriebsseitigen Reiborganträger gebildet ist.

14. Hydrodynamische Kopplungsvorrichtung nach einem der Ansprüche 1 bis 13,
**dadurch gekennzeichnet,**
**dass** der abtriebsseitige Reiborganträger (147) mit einer Verzahnung (46) zur axial verlagerbaren, aber drehfesten Mitnahme der zweiten Reiborgane (66) versehen ist.

15. Hydrodynamische Kopplungsvorrichtung nach Anspruch 14,
**dadurch gekennzeichnet,**
**dass** die Verzahnung (46) des abtriebsseitigen Reiborganträgers (148) in Umfangsrichtung über Zähne (178) und Radialabsenkungen (177-Fig.3) im Wechsel miteinander verfügt, wobei jeweils zwei Zähne (178) durch je eine Radialabsenkung (177-Fig.3) miteinander verbunden sind.

16. Hydrodynamische Kopplungsvorrichtung nach Anspruch 15,
**dadurch gekennzeichnet,**
**dass** Zähne (178) der Verzahnung (46) jeweils mit zumindest einem Strömungsdurchgang (150-Fig.3) für das fluidförmige Medium versehen sind.

17. Hydrodynamische Kopplungsvorrichtung nach Anspruch 14,
**dadurch gekennzeichnet,**
**dass** die Verzahnung (46) des abtriebsseitigen Reiborganträgers (148) in Umfangsrichtung über Zähne (178) und Ausklinkungen (172-Fig.4) im Wechsel miteinander verfügt, wobei jeweils eine Ausklinkung (172-Fig.4) zwischen zwei Zähnen (178) ausgebildet ist und als Strömungsdurchgang (150) für das fluidförmige Medium dient.

18. Hydrodynamische Kopplungsvorrichtung nach einem der Ansprüche 1 bis 17,
**dadurch gekennzeichnet,**
**dass** von den zur Versorgung des hydrodynamischen Kreises (24) vorgesehenen Strömungsdurchlässen (144, 154) derjenige als Strömungszufluss (156) Verwendung findet, der, in Strömungsrichtung gesehen, näher an den Reiborganen (65, 66) der Überbrückungskupplung (48) als an dem hydrodynamischen Kreis (24) liegt, während der andere Strömungsdurchlass (154) als Strömungsabfluss (158) wirkt.

## Claims

1. Hydrodynamic coupling apparatus (1) which is configured as a 3-line system, having a coupling housing (5) which can be brought into operative connection with a drive (2) and encloses a hydrodynamic circuit which is formed by at least one impeller (17) and one turbine wheel (19), a lock-up clutch (48) which has a friction region (69), and a torsional vibration damper (80), the lock-up clutch (48) being connected to a drive-side transmission element (78) of the torsional vibration damper (80), and the drive-side transmission element (78) being operatively connected to an output-side transmission element (106) of the torsional vibration damper (80) via at least one energy accumulation group (130, 132), the output-side transmission element (106) being connected to an output means (116), wherein the at least one energy accumulation group (130, 132) of the torsional vibration damper (80) is assigned at least one sealing arrangement (100) which engages over an extent region of the at least one energy accumulation group (130; 132), in order to bring about a separation of a first flow path (142) for fluid medium between at least one first flow passage (146) and the friction region (69) and a second flow path (182) for fluid medium between at least one second flow passage (154) and the hydrodynamic circuit (24) for the at least predominant proportion of the fluid medium which passes the two flow paths (142, 182), **characterized in that** the sealing arrangement (100) is received on a further transmission element (94) of the torsional vibration damper (80), which further transmission element (94) can be moved relative to the drive-side transmission element (78), and the said sealing arrangement (100) interacts with the drive-side transmission element (78) in order to separate the fluid medium which passes the two flow paths (142, 182).

2. Hydrodynamic coupling apparatus according to Claim 1, having a lock-up clutch which has a plurality of friction elements, of which first friction elements are connected to the housing which serves as drive-side friction-element carrier and second friction elements are connected to the drive-side transmission element of the torsional vibration damper, which drive-side transmission element serves as output-side friction-element carrier, wherein the sealing arrangement (100) interacts with the output-side friction-element carrier (148) in order to separate the fluid medium which passes the two flow paths (142, 182).

3. Hydrodynamic coupling apparatus according to Claim 1 or 2 having a torsional vibration damper, in which the drive-side transmission element is assigned to a drive-side energy accumulation group and the output-side transmission element is assigned to an output-side energy accumulation group, the two energy accumulation groups being connected to one another by an intermediate transmission element which serves as output transmission element for the drive-side energy accumulation group and as input transmission element for the output-side energy accumulation group, **characterized in that** the intermediate transmission element (94) is provided for receiving the sealing arrangement (100).

4. Hydrodynamic coupling apparatus according to one of Claims 1 to 3, **characterized in that** the sealing arrangement (100), starting from a fastening location (180) on the torsional vibration damper (80), is approximated to the drive-side transmission element (78) apart from a gap (S) by way of a region (108; 168) which is remote from the said fastening location (180), with the result that a gap seal (176; 178) is produced between the said region (108; 168) of the sealing arrangement (100) and the transmission element (78).

5. Hydrodynamic coupling apparatus according to one of Claims 1 to 3, **characterized in that** the sealing arrangement (100), starting from its fastening location (180) on the torsional vibration damper (80), comes into contact via a contact sealing element (170) with the drive-side transmission element (78) by way of its region (108; 168) which is remote from the said fastening location (180).

6. Hydrodynamic coupling apparatus according to Claim 4, **characterized in that** the sealing arrangement (100) is approximated axially to the drive-side transmission element (78) by way of its region (108) which is remote from the fastening location (180) on the torsional vibration damper (100), with the result that an at least substantially axial gap seal (174) is produced.

7. Hydrodynamic coupling apparatus according to Claim 4, **characterized in that** the sealing arrangement (100) is approximated at least substantially radially to the drive-side transmission element (78) by way of its region (168) which is remote from the fastening location (180) on the torsional vibration damper (80), with the result that an at least substantially radial gap seal (176) is produced.

8. Hydrodynamic coupling apparatus according to Claim 5, **characterized in that** the sealing arrangement (100) acts at least substantially axially via a contact sealing element (170) on the drive-side transmission element (78) by way of its region (108) which is remote from the fastening location (180) on the torsional vibration damper (80).

9. Hydrodynamic coupling apparatus according to Claim 5, **characterized in that** the sealing arrangement (100) acts at least substantially radially via a contact sealing element (170) on the drive-side transmission element (78) by way of its region (168) which is remote from the fastening location (180) on the torsional vibration damper (80).

10. Hydrodynamic coupling apparatus according to one of Claims 1 to 9, **characterized in that** the first flow passage (146) is active as flow inlet (156) for the fluid medium to the hydrodynamic circuit (24) and the second flow passage (154) is active as flow outlet (158) for the fluid medium from the hydrodynamic circuit (24).

11. Hydrodynamic coupling apparatus according to one of Claims 1 to 10, **characterized in that** a component (148) which is assigned to the drive-side transmission element (78) is configured with flow through passages (150), via which the fluid medium can be guided to the friction surfaces (70) of the friction region (69).

12. Hydrodynamic coupling apparatus according to one of Claims 1 to 11, **characterized in that** the flow through passages (150) are oriented at least substantially onto the friction surfaces (70) of the friction elements (66).

13. Hydrodynamic coupling apparatus according to one of Claims 1 to 12, **characterized in that** the component (148) which is assigned to the drive-side transmission element (78) is formed by the output-side friction-element carrier.

14. Hydrodynamic coupling apparatus according to one of Claims 1 to 13, **characterized in that** the output-side friction-element carrier (147) is provided with a toothing system (46) for the axially displaceable but rotationally fixed driving of the second friction elements (66).

15. Hydrodynamic coupling apparatus according to Claim 14, **characterized in that** the toothing system (46) of the output-side friction-element carrier (148) has teeth (178) and radial recessed portions (177 - Fig. 3) alternating with one another in the circumferential direction, in each case two teeth (178) being connected to one another by in each case one radial recessed portion (177 - Fig. 3).

16. Hydrodynamic coupling apparatus according to Claim 15, **characterized in that** teeth (178) of the toothing system (46) are provided in each case with at least one flow through passage (150 - Fig. 3) for the fluid medium.

17. Hydrodynamic coupling apparatus according to Claim 14, **characterized in that** the toothing system (46) of the output-side friction-element carrier (148) has teeth (178) and notches (172 - Fig. 4) alternating with one another in the circumferential direction, in each case one notch (172 - Fig. 4) being formed between two teeth (178) and serving as fluid through passage (150) for the fluid medium.

18. Hydrodynamic coupling apparatus according to one of Claims 1 to 17, **characterized in that that** one of the flow through passages (144, 154) which is provided for supplying the hydrodynamic circuit (24) is used as flow inlet (156) which, as viewed in the flow direction, lies closer to the friction elements (65, 66) of the lock-up clutch (48) than to the hydrodynamic circuit (24), while the other flow through passage (154) acts as flow outlet (158).

## Revendications

1. Dispositif d'accouplement hydrodynamique (1) réalisé sous forme de système à 3 lignes, comprenant un boîtier d'embrayage (5), qui peut être amené en liaison fonctionnelle avec un entraînement (2), et un circuit hydrodynamique formé par au moins une roue de pompe (17) et une roue de turbine (19), un embrayage de court-circuitage (48) disposant d'une région de frottement (69) et un amortisseur d'oscillations de torsion (80), l'embrayage de court-circuitage (48) étant connecté à un élément de transfert (78) de l'amortisseur d'oscillations de torsion (80) du côté de l'entraînement, et l'élément de transfert (78) du côté de l'entraînement étant en liaison fonctionnelle par le biais d'au moins un groupe accumulateur d'énergie (130, 132) avec un élément de transfert (106) de l'amortisseur d'oscillations de torsion (80) du côté de la sortie, l'élément de transfert (106) du côté de la sortie étant connecté à un entraînement de sortie (116),
l'au moins un groupe accumulateur d'énergie (130, 132) de l'amortisseur d'oscillations de torsion (80) étant associé à au moins un agencement d'étanchéité (100) qui vient en prise par le dessus avec une région d'étendue de l'au moins un groupe accumulateur d'énergie (130, 132), afin de provoquer une séparation d'une première voie d'écoulement (142) pour milieu fluidique entre au moins un premier passage d'écoulement (146) et la région de frottement (69) et d'une deuxième voie d'écoulement (182) pour milieu fluidique entre au moins un deuxième passage d'écoulement (154) et le circuit hydrodynamique (24) pour la portion au moins majeure du milieu fluidique passant par les deux voies d'écoulement (142, 182),
**caractérisé en ce que**
l'agencement d'étanchéité (100) est reçu sur un élément de transfert supplémentaire (94) de l'amortisseur d'oscillations de torsion (80) déplaçable par rapport à l'élément de transfert (78) du côté de l'entraînement, et coopère avec l'élément de transfert (78) du côté de l'entraînement pour séparer le milieu fluidique passant par les deux voies d'écoulement (142, 182).

2. Dispositif d'accouplement hydrodynamique selon la revendication 1, comprenant un embrayage de court-circuitage, qui dispose d'une pluralité d'organes de friction, dont des premiers organes de friction sont connectés au boîtier servant de support d'organe de friction du côté de l'entraînement et dont des deuxièmes organes de friction sont connectés à l'élément de transfert de l'amortisseur d'oscillations de torsion du côté de l'entraînement, servant de support d'organe de friction du côté de l'entraînement de sortie, l'agencement d'étanchéité (100) coopèrant avec le support d'organe de friction (148) du côté de l'entraînement de sortie, pour la séparation du milieu fluidique passant par les deux voies d'écoulement (142, 182).

3. Dispositif d'accouplement hydrodynamique selon la revendication 1 ou 2, comprenant un amortisseur d'oscillations de torsion, dans lequel l'élément de transfert du côté de l'entraînement est associé à un groupe accumulateur d'énergie du côté de l'entraînement, et l'élément de transfert du côté de l'entraînement de sortie est associé à un groupe accumulateur d'énergie du côté de l'entraînement de sortie, les deux groupes accumulateurs d'énergie étant connectés l'un à l'autre par un élément de transfert intermédiaire qui sert d'élément de transfert de sortie au groupe accumulateur d'énergie du côté de l'entraînement, et d'élément de transfert d'entrée au groupe accumulateur d'énergie du côté de la sortie,
**caractérisé en ce que**
l'élément de transfert intermédiaire (94) est prévu pour recevoir l'agencement d'étanchéité (100).

4. Dispositif d'accouplement hydrodynamique selon l'une quelconque des revendications 1 à 3,
**caractérisé en ce que**
l'agencement d'étanchéité (100), partant d'un point de fixation (180) au niveau de l'amortisseur d'oscillations de torsion (80), avec une région (108 ; 168) éloignée de ce point de fixation (180) à l'exception d'une fente (S), est rapproché de l'élément de transfert (78) du côté de l'entraînement, de sorte qu'entre cette région (108 ; 168) de l'agencement d'étanchéité (100) et l'élément de transfert (78), il se forme un joint d'étanchéité à fente (176 ; 178).

5. Dispositif d'accouplement hydrodynamique selon l'une quelconque des revendications 1 à 3,
**caractérisé en ce que**
l'agencement d'étanchéité (100), partant de son point de fixation (180) au niveau de l'amortisseur d'oscillations de torsion (80), avec sa région (108 ; 168) éloignée de ce point de fixation (180), vient en appui par le biais d'un élément d'étanchéité de contact (170) contre l'élément de transfert (78) du côté de l'entraînement.

6. Dispositif d'accouplement hydrodynamique selon la revendication 4,
**caractérisé en ce que**
l'agencement d'étanchéité (100) avec sa région (108) éloignée du point de fixation (180) au niveau de l'amortisseur d'oscillations de torsion (100) est rapproché axialement de l'élément de transfert (78) du côté de l'entraînement, de sorte qu'il se forme au moins un joint d'étanchéité à fente (174) essentiellement axial.

7. Dispositif d'accouplement hydrodynamique selon la revendication 4,
**caractérisé en ce que**
l'agencement d'étanchéité (100) avec sa région (168) éloignée du point de fixation (180) au niveau de l'amortisseur d'oscillations de torsion (80) est rapproché au moins essentiellement radialement de l'élément de transfert (78) du côté de l'entraînement de sorte qu'il se forme au moins un joint d'étanchéité à fente (176) essentiellement radial.

8. Dispositif d'accouplement hydrodynamique selon la revendication 5,
**caractérisé en ce que**
l'agencement d'étanchéité (100) avec sa région (108) éloignée du point de fixation (180) au niveau de l'amortisseur d'oscillations de torsion (80) vient en prise au moins essentiellement axialement par le biais d'un élément d'étanchéité de contact (170) avec l'élément de transfert (78) du côté de l'entraînement.

9. Dispositif d'accouplement hydrodynamique selon la revendication 5,
**caractérisé en ce que**
l'agencement d'étanchéité (100) avec sa région (168) éloignée du point de fixation (180) au niveau de l'amortisseur d'oscillations de torsion (80) vient en prise au moins essentiellement radialement par le biais d'un élément d'étanchéité de contact (170) avec l'élément de transfert (78) du côté de l'entraînement.

10. Dispositif d'accouplement hydrodynamique selon l'une quelconque des revendications 1 à 9,
**caractérisé en ce que**
le premier passage d'écoulement (146) agit comme un afflux d'écoulement (156) pour le milieu fluidique au circuit hydrodynamique (24) et le deuxième passage d'écoulement (154) agit comme une sortie d'écoulement (158) pour le milieu fluidique depuis le circuit hydrodynamique (24).

11. Dispositif d'accouplement hydrodynamique selon l'une quelconque des revendications 1 à 10,
**caractérisé en ce**
**qu'**un composant (148) associé à l'élément de transfert (78) du côté de l'entraînement est réalisé avec des passages d'écoulement (150), par le biais desquels le milieu fluidique peut être guidé jusqu'aux surfaces de frottement (70) de la région de frottement (69).

12. Dispositif d'accouplement hydrodynamique selon l'une quelconque des revendications 1 à 11,
**caractérisé en ce que**
les passages d'écoulement (150) sont orientés au moins essentiellement vers les surfaces de frottement (70) des organes de frottement (66).

13. Dispositif d'accouplement hydrodynamique selon l'une quelconque des revendications 1 à 12,
**caractérisé en ce que**
le composant (148) associé à l'élément de transfert (78) du côté de l'entraînement est formé par le support d'organe de frottement du côté de l'entraînement.

14. Dispositif d'accouplement hydrodynamique selon l'une quelconque des revendications 1 à 13,
**caractérisé en ce que**
le support d'organe de frottement (147) du côté de la sortie est pourvu d'une denture (46) pour l'entraînement déplaçable axialement mais solidaire en rotation des deuxièmes organes de frottement (66).

15. Dispositif d'accouplement hydrodynamique selon la revendication 14,
**caractérisé en ce que**
la denture (46) du support d'organe de frottement (148) du côté de la sortie dispose dans la direction périphérique de dents (178) et de renfoncements radiaux (177 - figure 3) en alternance les uns avec les autres, deux dents (178) étant à chaque fois connectées par un renfoncement radial respectif (177 - figure 3).

16. Dispositif d'accouplement hydrodynamique selon la revendication 15,
**caractérisé en ce que**
les dents (178) de la denture (46) sont pourvues à chaque fois d'au moins un passage d'écoulement (150 - figure 3) pour le milieu fluidique.

17. Dispositif d'accouplement hydrodynamique selon la revendication 14,
**caractérisé en ce que**
la denture (46) du support d'organe de frottement (148) du côté de la sortie dispose dans la direction périphérique de dents (178) et d'entailles (172 - figure 4) en alternance les unes avec les autres, une entaille (172 - figure 4) étant à chaque fois réalisée entre deux dents (178) et servant de passage d'écoulement (150) pour le milieu fluidique.

18. Dispositif d'accouplement hydrodynamique selon l'une quelconque des revendications 1 à 17,
**caractérisé en ce que**
parmi les passages d'écoulement (144, 154) prévus pour l'alimentation du circuit hydrodynamique (24), on utilise comme afflux d'écoulement (156) celui qui, vu dans la direction de l'écoulement, est plus près des organes de frottement (65, 66) de l'embrayage de court-circuitage (48) que du circuit hydrodynamique (24), tandis que l'autre passage d'écoulement (154) sert de sortie d'écoulement (158).
